# EUROPEAN PATENT APPLICATION

(11) **EP 2 709 318 A1**
(43) Date of publication of application: **19.03.2014**
(21) Application number: 12306104.6
(22) Date of filing: 13.09.2012
(51) Int. Cl.: H04L 12/70

(54) **Blade and Advanced Mezzanine Card AMC Activation Control In An Advanced Telecom Computing Architecture ATCA Shelf**

(71) Applicant: Alcatel Lucent, 75007 Paris (FR)
(72) Inventor: Louargant, Michel, 22300 Lannion (FR); Cherton, Guillaume, 22220 Plouguiel (FR)
(74) Representative: ALU Antw Patent Attorneys

(57) **Abstract**

A blade admission control arrangement in an Advanced Telecom Computing Architecture ATCA shelf (1) and comprising a shelf manager (8) adapted to control the activation of a blade (4) plugged in a slot (3) of a backplane (2) of the shelf. The arrangement comprises a shelf inventory memory (10) storing, for each blade adapted to be plugged in a slot, first shelf information describing the available blade power budget at the slot, second shelf information describing the available blade connectivity of the slot, and third shelf information describing acceptable blade configurations at the slot. The blade admission control arrangement also comprises a blade inventory memory (6) associated to the blade and adapted to store first blade information describing the power budget required by the blade, second blade information describing the connectivity of the blade, and third blade information describing blade configuration information of the blade. The shelf manager retrieves and compares information stored in the shelf inventory memory with information stored in the blade inventory memory to control if the power budget required by the blade matches the available blade power budget at the slot, to control connectivity matching between the blade and the slot, and to control if the blade configuration information of the blade also matches with the acceptable blade configuration at the slot. If these three controls are positive, the blade is powered on. The blade admission control arrangement is further adapted to control the activation of an Advanced Mezzanine Card AMC (5) plugged in the blade in a similar way as for the above activation of the blade plugged in the slot.

## Description

The present invention relates to a blade admission control arrangement in a shelf of a telecommunication exchange, said blade admission control arrangement comprising a shelf manager adapted to control the activation of a blade plugged in a slot of a backplane of said shelf, said blade admission control arrangement further comprising a shelf inventory memory associated to said shelf manager and adapted to store, for each blade adapted to be plugged in each slot of said backplane, first shelf information describing the available blade power budget at said slot, and second shelf information describing the available blade connectivity of said slot, said blade admission control arrangement further comprising a blade inventory memory associated to said blade and adapted to store first blade information describing the power budget required by said blade, and second blade information describing the connectivity of said blade, said shelf manager being adapted, by comparing information stored in said shelf inventory memory with information stored in said blade inventory memory, to control if the power budget required by said blade matches the available blade power budget at said slot and to control connectivity matching between said blade and said slot.

Such a blade admission control arrangement is generally known in the art, e.g. in an Advanced Telecom Computing Architecture ATCA shelf. In such an ATCA shelf, blade activation (for instance when a blade is plugged in a slot) is controlled by the shelf manager. The standard procedure for the activation of a blade is to control if the power budget required by the blade matches the power capabilities of the slot and to control the connectivity matching between plugged blade and its slot. Any blade fitting the two controls mentioned above will be activated, i.e. power-on, and will boot without any further control.

As a consequence, unwanted blades could be plugged, activated (or started) and running in the shelf with possible disastrous impact on the behavior of the entire shelf.

A solution to prevent this problem would be to use one of the blades in the shelf, playing the role of "system manager" in order to de-activate any unwanted blade/slot configuration. However, that system manager blade will take this decision too late, once the unwanted blade is already activated.

Involving a system manager blade in the activation sequence of the blades would also require a relatively large modification of the shelf manager. The problem would then still be the control of the activation of this system manager blade in the shelf for which no activation control would be possible.

An object of the present invention is to avoid unwanted or unrecognized blades to be activated in the shelf.

According to a characterizing embodiment of the invention, this object is achieved due to the fact that said shelf inventory memory is further adapted to store, for each blade adapted to be plugged in each slot of said backplane, third shelf information describing acceptable blade configurations at said slot, that said blade inventory memory is further adapted to store third blade information describing blade configuration information of said blade, and that said shelf manager is further adapted to control if said blade configuration information of said blade also matches with the acceptable blade configuration at said slot.

In this way, only a recognized blade fitting not only the above two controls on power and connectivity but also the additional control on configuration will be activated when plugged in the slot. The activation or power-on of an unwanted blade is thereby prevented and the insertion of such an unwanted blade in a slot will have no negative impact on the behavior of the entire shelf. Only recognized blade/slot configurations are powered on.

A major benefit of the present invention is to avoid unwanted blade to be powered on and started in the shelf. Powering and booting an unknown blade in a shelf may have disastrous consequences. The embodiment also provides a mean to increase the security of the platform, avoiding unrecognized blades to run in the shelf.

In a preferred characterizing embodiment of the present invention, said shelf manager is further adapted to control the activation of an Advanced Mezzanine Card AMC plugged in said blade, said first shelf information further describing the available blade/AMC power budget at said slot, said second shelf information further describing available blade/AMC connectivity of said slot, and said third shelf information describing acceptable blade/AMC configurations at said slot, said blade admission control arrangement further comprising an AMC inventory memory associated to said AMC and adapted to store, for each AMC adapted to be plugged in each blade, first AMC information describing the power budget required by said AMC, second AMC information describing the connectivity of said AMC, and third AMC information describing AMC configuration information of said AMC, and said shelf manager is further adapted, by comparing information stored in said shelf inventory memory with information stored in said AMC inventory memory and information stored in said blade inventory memory, to control if the power budget required by said blade/AMC combination matches the available blade/AMC power budget at said slot, to control connectivity matching between said blade and said AMC with available blade/AMC connectivity at said slot, and to control if said blade configuration information and said AMC configuration information matches with the acceptable blade/AMC configuration at said slot.

In this way, the activation controls are no longer performed only on a blade plugged in a slot, but also on any Advanced Mezzanine Card AMC plugged in the blade. This improves even more the security of avoiding an unwanted blade or blade/AMC configuration to be activated. For better flexibility and easy configuration evolution multiple acceptable combinations of blade/AMC may be declared for each slot of the shelf.

Moreover, in the case where AMC could be replaced in the field, the present embodiment allows to control that the new configuration built in inserting a new AMC is an authorized one that will not cause problem and can be powered.

Another characterizing embodiment of the present invention is that said shelf manager is located on said backplane and that said shelf inventory memory is a Field Replaceable Unit FRU non-volatile memory also located on said backplane.

The fact that accepted combinations of blades and AMC are stored in an FRU non-volatile inventory memory in the shelf insures the operation of the controls even in the case of shelf power cycle or shelf manager replacement.

The acceptable configurations could be store in a shelf FRU EEPROM in factory on a per product basis. This would guarantee that, for a given product, only restricted blade types, e.g. only validated configurations, could be powered in the shelf.

Also another characterizing embodiment of the present invention is that said blade inventory memory is a Field Replaceable Unit FRU non-volatile memory located on said blade, and that said AMC inventory memory is a Field Replaceable Unit FRU non-volatile memory also located on said Advanced Mezzanine Card AMC.

It is to be noted that a PCI Industrial Computer Manufacturers Group PICMG standard defines information located in a shelf Field Replaceable Unit FRU non-volatile memory to describe the power budget available at each slot, as well as to describe the connectivity available for each slot of the shelf. PICMG also defines information located in the blade FRU inventory memory that describes the connectivity available for each AMC slot on the blade. In the blade and AMC FRU inventory memory, data are also provided to determine what are their required respective connectivity and power budget.

When a new board (blade or AMC) is plugged, the shelf manager is involved in its activation and especially in the control of the connectivity and the power budget of the newly inserted board. This is done in a phase specified as M3 to M4 transition in an FRU activation sequence of the PICMG standard. The shelf manager compares the capabilities of the housing element (slot or blade) and the requirements of the newly plugged board (blade or AMC), and then decides to power-on the plugged board or not.

As already mentioned, the present invention distinguishes from this known standard in that it introduces an additional control on the type of element (blade and/or AMC) plugged prior to take decision of powering this element. This is achieved by adding information on acceptable blade or blade/AMC configurations for each slot that is introduced. This additional information is stored as third shelf information in the shelf FRU non-volatile inventory memory.

Yet another characterizing embodiment of the present invention is that said shelf manager is coupled to said slot via an Intelligent Platform Management Bus IPMB adapted to carry Intelligent Platform Management Interface IPMI messages.

Again another characterizing embodiment of the present invention is that said blade inventory memory is located on said blade and said blade includes a Board Management Controller BMC adapted to exchange IPMI messages with said shelf manager over said IPMB bus, said IPMI messages carrying said first, second and third blade information, and that said AMC inventory memory is located on said Advanced Mezzanine Card AMC and said AMC includes a Module Management Controller MMC adapted to exchange IPMI messages with the shelf manager over the IPMB bus, said IPMI messages carrying said first, second and third AMC information.

In this way, the procedure whereby the shelf manager recovers blade FRU non-volatile inventory memory contents of the blade and AMC, for the ATCA slot where a new blade is plugged, uses existing standard IPMI commands. There is thus no modification required in the shelf.

The shelf manager reads the information on acceptable blades or blade/AMC combinations for the slot in the shelf FRU non-volatile inventory memory and checks if the configuration plugged in the slot is one of the acceptable combinations. The shelf manager then makes the decision to power the newly plugged element.

Also another characterizing embodiment of the present invention is that said blade configuration information of said blade inventory memory comprises Short Board Name, Serial Number, and Revision of said blade.

The principle is to identify the blade and AMC plugged in the slot thanks to standard information they contain and to control that they match a list of authorized configurations for the slot as declared in the shelf inventory memory.

An advantage of the present embodiment is that it requires only evolution in the software of the shelf manager to recover information and to control the configurations at the slot. The embodiment works for any ATCA blade and AMC, even off the shelf ones, and there is no need of modification of blade or AMC.

Further characterizing embodiments of the present blade admission control arrangement are mentioned in the appended claims.

It is to be noticed that the terms "comprising" or "including", used in the claims, should not be interpreted as being restricted to the means listed thereafter. Thus, the scope of an expression such as "a device comprising means A and B" should not be limited to an embodiment of a device consisting only of the means A and B. It means that, with respect to embodiments of the present invention, A and B are essential means of the device.

Similarly, it is to be noticed that the term "coupled", also used in the claims, should not be interpreted as being restricted to direct connections only. Thus, the scope of the expression such as "a device A coupled to a device B" should not be limited to embodiments of a device wherein an output of device A is directly connected to an input of device B. It means that there may exist a path between an output of A and an input of B, which path may include other devices or means.

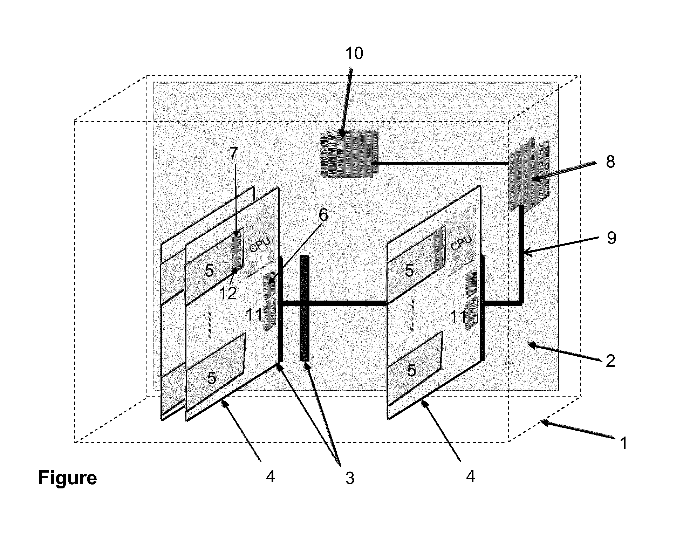

The above and other objects and features of the invention will become more apparent and the invention itself will be best understood by referring to the following description of an embodiment taken in conjunction with the accompanying drawings wherein the single Figure represents a blade admission control arrangement of a telecommunication exchange comprising a shelf manager to control, according to the invention, the activation of a blade or of a blade/AMC configuration plugged in a slot of a backplane of the shelf .

The shelf 1 shown at the Figure forms part of a telecommunication exchange and is preferably an Advanced Telecom Computing Architecture ATCA. ATCA is a standard architecture for telecom platforms defined by the PCI Industrial Computer Manufacturers Group PICMG. The platform or shelf 1 is built around a backplane 2 that interconnects multiple slots 3, typically via Ethernet physical links.

The slots 3, according to their position in the shelf 1, are targeted to house either computing or switching blades 4.

These blades 4 may in turn house Advanced Mezzanine Card slots, where Advanced Mezzanine Cards or modules AMC 5 can be plugged.

Any blade 4 and AMC 5 houses at least one Field Replaceable Unit FRU non-volatile inventory memory, respectively a blade inventory memory 6 and an AMC inventory memory 7, for their identification. This identification includes, but not limited to, Short Board Name, serial number, revision, ...

The ATCA shelf 1 also contains at least one but preferably two redundant modules called shelf manager 8. The shelf manager 8 is dedicated to the management of the shelf 1 itself and of the blades 4 plugged in the slots 3.

The shelf manager 8 is coupled to the slots 3 via an Intelligent Platform Management Bus IPMB 9 which is a specific physical interface carrying Intelligent Platform Management Interface IPMI specific messages for the management of the blades 4 and AMC 5 plugged in the shelf 1.

The backplane 2 supports the shelf manager 8 and one or two (redundant) Field Replaceable Unit FRU non-volatile memories called shelf inventory memory 10. The shelf inventory memory 10 is used for the storage of identification information of the shelf such as serial number and version of the shelf.

Each blade 4 plugged in a slot 3 includes a Board Management Controller BMC 11 to exchange IPMI messages over the IPMB bus 9 with the shelf manager 8. Each AMC 5 plugged in an AMC slot of a blade 4 includes a Module Management Controller MMC 12 to also exchange IPMI messages over the IPMB bus with the shelf manager 8.

Both the board management controller 11 and the module management controller 12 are used to control the activation sequence of the blade 4 and AMC 5, as well as for the supervision of their health.

In order to authorize or not the activation, i.e. the power on, of a blade 4 inserted in a slot 3, the shelf 1 comprises a blade admission control arrangement including, at least, the shelf manager 8 with its shelf inventory memory 10 and the blade 4 with its blade inventory memory 6.

The principle of the blade admission control arrangement is to identify a blade 4, and indirectly its AMC 5 if any, plugged in a slot 3 thanks to standard information contained in the blade inventory memory 6 and AMC inventory memory 7 and to control that this information matches a list of authorized configurations for the slot 3 as declared in the shelf inventory memory 10. After several controls of information match, the blade admission control arrangement starts the activation procedure of the blade 4 and AMC 5 only if the latter comply with recognized blades or blade/AMC configurations. The blade 4 and AMC 5 are then powered on.

In more detail, the shelf inventory memory 10 associated to the shelf manager 8 stores, for each blade 4 and for each Advanced Mezzanine Card AMC 5 adapted to be plugged in the blade 4, first shelf information describing the available blade/AMC power budget at each slot, second shelf information describing the available blade/AMC connectivity of each slot, and third shelf information describing acceptable blade/AMC configurations at each slot.

On the other hand, the blade inventory memory 6 associated to the blade 4 as well as the AMC inventory memory 7 associated to the AMC 5 respectively store first blade/AMC information describing the power budget required by the blade/AMC, second blade/AMC information describing the connectivity of the blade/AMC, and third blade/AMC information describing blade/AMC configuration information of the blade/AMC.

The shelf manager 8 performs admission control on the plugged element prior (blade 4 and/or AMC 5) by recovering and comparing information stored in the shelf inventory memory 10 with information stored in the blade inventory memory 6 and information stored in the AMC inventory memory 7.

When the shelf manager 8 is informed that a new blade 4 and/or AMC 5 is plugged, the Board Management Controller BMC 11 of the blade 4 and/or the Module Management Controller MMC 12 of AMC 5 exchanges, by means of existing standard IPMI commands, IPMI messages with the shelf manager 8 over the IPMB bus 9. These IPMI messages carry the first, second and third blade/AMC information respectively.

To perform the activation control of the blade/AMC in the slot 3, the shelf manager 8
- controls if the power budget required by the blade/AMC combination matches the available blade/AMC power budget at slot 3,
- controls the connectivity matching between the blade 4 and AMC 5 with available blade/AMC connectivity at slot 3, and
- controls if the blade configuration information and the AMC configuration information match with the acceptable blade/AMC configuration at slot 3.

If these three controls are positive, the plugged element is powered on.

It is to be noted that the third shelf information describing acceptable blade configurations at the slots is stored in the shelf inventory memory 10 as a list of compiled binary descriptions of acceptable blade configurations at each slot. Furthermore, for more flexibility, several combinations of blade/AMC may be declared for each slot of the shelf 1.

As mentioned above, the PCI Industrial Computer Manufacturers Group PICMG standard defines information located in a shelf Field Replaceable Unit FRU non-volatile inventory memory 10 to describe the power budget available at each slot, as well as to describe the connectivity available for each slot of the shelf. PICMG also defines information located in the blade FRU inventory memory 6 that describes the connectivity available for each AMC slot on the blade. In the blade and AMC FRU inventory memory, data are also provided to determine what are their required respective connectivity and power budget.

The PICMG can thereby be seen as defining the first shelf and blade/AMC information as well as the second shelf and blade/AMC information. However, nothing is mentioned about the third shelf and blade/AMC information describing acceptable blade/AMC configurations and blade/AMC configuration information of the blade/AMC.

Moreover, the PICMG standard defines mandatory fields in the FRU blade inventory memory 6 and FRU AMC inventory memory 7. One option to describe the configurations could be to use one of these fields to identify the blade and AMC plugged, one of the fields being the "Board Name". The advantage of using this field is that it is relatively short and thus reduces the memory required to declare the acceptable combinations of blades and AMC.

It is to be noted that, to limit memory required to store acceptable combinations in the shelf inventory memory 10, an encoded format may be used, e.g. regular expressions including wildcard.

The blade admission control arrangement operates for blades housing or not one or more AMC. In the case of a blade carrying an AMC, the control can be made only on the blade and the AMC can be ignored.

The present principle can be extended to Rear Transition Modules RTM (not shown) plugged on a blade 4 in an ATCA shelf 1.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A blade admission control arrangement in a shelf (1) of a telecommunication exchange, said blade admission control arrangement comprising a shelf manager (8) adapted to control the activation of a blade (4) plugged in a slot (3) of a backplane (2) of said shelf, said blade admission control arrangement further comprising a shelf inventory memory (10) associated to said shelf manager (8) and adapted to store, for each blade adapted to be plugged in each slot of said backplane, first shelf information describing the available blade power budget at said slot, and second shelf information describing the available blade connectivity of said slot, said blade admission control arrangement further comprising a blade inventory memory (6) associated to said blade (4) and adapted to store first blade information describing the power budget required by said blade, and second blade information describing the connectivity of said blade, said shelf manager being adapted, by comparing information stored in said shelf inventory memory (10) with information stored in said blade inventory memory (6), to control if the power budget required by said blade matches the available blade power budget at said slot and to control connectivity matching between said blade and said slot,
***characterized in that*** said shelf inventory memory (10) is further adapted to store, for each blade adapted to be plugged in each slot of said backplane (2), third shelf information describing acceptable blade configurations at said slot,
***in that*** said blade inventory memory (6) is further adapted to store third blade information describing blade configuration information of said blade,
***and in that*** said shelf manager (8) is further adapted to control if said blade configuration information of said blade also matches with the acceptable blade configuration at said slot.

2. The blade admission control arrangement according to claim **1,**
***characterized in that*** said shelf manager (8) is further adapted to control the activation of an Advanced Mezzanine Card AMC (5) plugged in said blade (4), said first shelf information further describing the available blade/AMC power budget at said slot, said second shelf information further describing available blade/AMC connectivity of said slot, and said third shelf information describing acceptable blade/AMC configurations at said slot, said blade admission control arrangement further comprising an AMC inventory memory (7) associated to said AMC (5) and adapted to store, for each AMC adapted to be plugged in each blade, first AMC information describing the power budget required by said AMC, second AMC information describing the connectivity of said AMC, and third AMC information describing AMC configuration information of said AMC,
***and in that*** said shelf manager is further adapted, by comparing information stored in said shelf inventory memory (10) with information stored in said AMC inventory memory (7) and information stored in said blade inventory memory (6), to control if the power budget required by said blade/AMC combination matches the available blade/AMC power budget at said slot, to control connectivity matching between said blade and said AMC with available blade/AMC connectivity at said slot, and to control if said blade configuration information and said AMC configuration information matches with the acceptable blade/AMC configuration at said slot.

3. The blade admission control arrangement according to claim **1,**
***characterized in that*** said shelf manager (8) is located on said backplane (2),
***and in that*** said shelf inventory memory (10) is a Field Replaceable Unit FRU non-volatile memory also located on said backplane (2).

4. The blade admission control arrangement according to claim **1,**
***characterized in that*** said blade inventory memory (6) is a Field Replaceable Unit FRU non-volatile memory located on said blade (4).

5. The blade admission control arrangement according to claim **2,**
***characterized in that*** said AMC inventory memory (7) is a Field Replaceable Unit FRU non-volatile memory also located on said Advanced Mezzanine Card AMC (5).

6. The blade admission control arrangement according to claim **1,**
***characterized in that*** said shelf manager (8) is coupled to said slot (3) via an Intelligent Platform Management Bus IPMB (9) adapted to carry Intelligent Platform Management Interface IPMI messages.

7. The blade admission control arrangement according to claim **6,**
***characterized in that*** said blade inventory memory (6) is located on said blade (4),
***and in that*** said blade (4) includes a Board Management Controller BMC (11) adapted to exchange IPMI messages with said shelf manager (8) over said IPMB bus (9), said IPMI messages carrying said first, second and third blade information.

8. The blade admission control arrangement according to the claims **2** and **6**,
***characterized in that*** said AMC inventory memory (7) is located on said Advanced Mezzanine Card AMC (5),
***and in that*** said AMC (5) includes a Module Management Controller MMC (12) adapted to exchange IPMI messages with the shelf manager (8) over the IPMB bus (9), said IPMI messages carrying said first, second and third AMC information.

9. The blade admission control arrangement according to claim **1,**
***characterized in that*** said telecommunication exchange is an Advanced Telecom Computing Architecture ATCA telecom platform having said shelf (1) built around said backplane (2) that interconnects a plurality of slots (3).

10. The blade admission control arrangement according to claim **9**,
***characterized in that*** said slots (3) are interconnected via Ethernet physical links.

11. The blade admission control arrangement according to claim **1,**
***characterized in that*** said shelf manager (8) is adapted to store said third shelf information describing acceptable blade configurations at said slot (3) as a list of compiled binary descriptions of acceptable blade configurations at said slot.

12. The blade admission control arrangement according to any of the claims **1** or **2, *characterized in that*** said blade configuration information of said blade inventory memory (6) comprises Short Board Name, Serial Number, and Revision of said blade.

## Amended claims

### Amended claims in accordance with Rule 137(2) EPC.

**1.** A blade admission control arrangement in a shelf (1) of a telecommunication exchange, said blade admission control arrangement comprising a shelf manager (8) adapted to control the activation of a blade (4) plugged in a slot (3) of a backplane (2) of said shelf,
said shelf manager (8) being further adapted to control the activation of an Advanced Mezzanine Card AMC (5) plugged in said blade (4),
said blade admission control arrangement further comprising a shelf inventory memory (10) associated to said shelf manager (8) and adapted to store, for each blade adapted to be plugged in each slot of said backplane, first shelf information describing the available blade/AMC power budget at said slot, and second shelf information describing the available blade/AMC connectivity of said slot,
said blade admission control arrangement further comprising a blade inventory memory (6) associated to said blade (4) and adapted to store first blade information describing the power budget required by said blade, and second blade information describing the connectivity of said blade,
said shelf manager being adapted, by comparing information stored in said shelf inventory memory (10) with information stored in said blade inventory memory (6), to control if the power budget required by said blade matches the available blade/AMC power budget at said slot and to control connectivity matching between said blade/AMC and said slot, ***characterized in that*** said shelf inventory memory (10) is further adapted to store, for each blade adapted to be plugged in each slot of said backplane (2), third shelf information describing acceptable blade/AMC configurations at said slot, ***in that*** said blade inventory memory (6) is further adapted to store third blade information describing blade configuration information of said blade,
***in that*** said blade admission control arrangement further comprises an AMC inventory memory (7) associated to said AMC (5) and adapted to store, for each AMC adapted to be plugged in each blade, first AMC information describing the power budget required by said AMC, second AMC information describing the connectivity of said AMC, and third AMC information describing AMC configuration information of said AMC,
***and in that*** said shelf manager (8) is further adapted, by comparing information stored in said shelf inventory memory (10) with information stored in said AMC inventory memory (7) and information stored in said blade inventory memory (6), to control if the power budget required by said blade/AMC combination matches the available blade/AMC power budget at said slot, to control connectivity matching between said blade and said AMC with available blade/AMC connectivity at said slot, and to control if said blade/AMC configuration information of said blade/AMC also matches with the acceptable blade/AMC configuration at said slot.

**2.** The blade admission control arrangement according to claim **1**, ***characterized in that*** said shelf manager (8) is located on said backplane (2),
***and in that*** said shelf inventory memory (10) is a Field Replaceable Unit FRU non-volatile memory also located on said backplane (2).

**3.** The blade admission control arrangement according to claim **1**, ***characterized in that*** said blade inventory memory (6) is a Field Replaceable Unit FRU non-volatile memory located on said blade (4).

**4.** The blade admission control arrangement according to claim **1**, ***characterized in that*** said AMC inventory memory (7) is a Field Replaceable Unit FRU non-volatile memory located on said Advanced Mezzanine Card AMC (5).

**5.** The blade admission control arrangement according to claim **1**, ***characterized in that*** said shelf manager (8) is coupled to said slot (3) via an Intelligent Platform Management Bus IPMB (9) adapted to carry Intelligent Platform Management Interface IPMI messages.

**6.** The blade admission control arrangement according to claim **5**, ***characterized in that*** said blade inventory memory (6) is located on said blade (4),
***and in that*** said blade (4) includes a Board Management Controller BMC (11) adapted to exchange IPMI messages with said shelf manager (8) over said IPMB bus (9), said IPMI messages carrying said first, second and third blade information.

**7.** The blade admission control arrangement according to claim **5**, ***characterized in that*** said AMC inventory memory (7) is located on said Advanced Mezzanine Card AMC (5),
***and in that*** said AMC (5) includes a Module Management Controller MMC (12) adapted to exchange IPMI messages with the shelf manager (8) over the IPMB bus (9), said IPMI messages carrying said first, second and third AMC information.

**8.** The blade admission control arrangement according to claim **1**, ***characterized in that*** said telecommunication exchange is an Advanced Telecom Computing Architecture ATCA telecom platform having said shelf (1) built around said backplane (2) that interconnects a plurality of slots (3).

**9.** The blade admission control arrangement according to claim **8**, ***characterized in that*** said slots (3) are interconnected via Ethernet physical links.

**10.** The blade admission control arrangement according to claim **1**, ***characterized in that*** said shelf manager (8) is adapted to store said third shelf information describing acceptable blade configurations at said slot (3) as a list of compiled binary descriptions of acceptable blade configurations at said slot.

**11.** The blade admission control arrangement according to claim **1**, ***characterized in that*** said blade/AMC configuration information of said blade/AMC inventory memory (6) comprises Short Board Name, Serial Number, and Revision of said blade/AMC.
